# EUROPÄISCHE PATENTSCHRIFT

(11) **EP 3 186 144 B1**
(45) Veröffentlichungstag und Bekanntmachung des Hinweises auf die Patenterteilung: **19.06.2019**
(21) Anmeldenummer: 15748224.1
(22) Anmeldetag: 05.08.2015
(51) Int. Cl.: B63H 23/32

(54) **ABDICHTUNGSSYSTEM, VERFAHREN UND WASSERFAHRZEUG**
SEALING SYSTEM, METHOD AND WATERCRAFT
SYSTÈME D'ÉTANCHÉITÉ, PROCÉDÉ ET NAVIRE CORRESPONDANT

(30) Priorität: 28.08.2014 DE 102014217223
(43) Veröffentlichungstag der Anmeldung: 05.07.2017
(73) Patentinhaber: SKF Marine GmbH, 20457 Hamburg (DE)
(72) Erfinder: FANGAUF, Carlos, 20259 Hamburg (DE); BRAND, Jörg, 22946 Trittau (DE)
(74) Vertreter: Kuhstrebe, Jochen
(86) Internationale Anmeldenummer: PCT/EP2015/068049
(87) Internationale Veröffentlichungsnummer: WO 2016/030159

(56) Entgegenhaltungen:
- JP-A- H 068 882
- JP-A- H11 304 005
- US-A1- 2014 048 461

## Beschreibung

Die Erfindung betrifft ein Abdichtungssystem zum Abdichten einer von einer sich unter Wasser befindenden Welle nach dem Oberbegriff des Patentanspruchs 1, ein Verfahren zum Abdichten einer sich unter Wasser befindenden Welle sowie ein Wasserfahrzeug mit einem Abdichtungssystem zum Abdichten einer Propellerwelle.

Herkömmliche Abdichtungssystem zum Abdichten einer Propellerwelle bei Wasserfahrzeugen haben eine auf die Welle aufsetzbare und mit dieser drehfest verbindbare Laufbuchse, die von einem zur Laufbuchse feststehenden Gehäuse umschlossen ist. In dem Gehäuse ist zumindest eine zur Laufbuchse geöffnete Schmiermittelkammer und eine zur Laufbuchse geöffnete Luftkammer ausgebildet. Die Kammern sind über einen Dichtring gegeneinander abgedichtet. Zudem ist eine die Laufbuchse umgreifende propellernahe Gleitringdichtung vorgesehen. Über eine Zuleitung und eine Ableitung wird durch die Luftkammer und somit auch durch die Ringkammer ein kontinuierlicher Luftstrom geführt. Die Schmiermittelkammer steht mit einer kontinuierlichen Fettschmierung des zumindest einen Dichtrings in Verbindung. Die Fettschmierung hat jedoch den Nachteil, dass bei einem Fetteinbruch in die Luftkammer die Luftleitungen verstopfen können, so dass diese regelmäßig aufwändig gespült werden müssen. Zudem ist Fett nicht das optimale Schmier- und Kühlmittel für den bevorzugterweise aus einem Elastomer bestehenden Dichtring, so dass sich die Fettschmierung nachteilig auf dessen Lebensdauer und insbesondere auf dessen Belastbarkeit auswirkt. Durch den kontinuierlichen Luftstrom werden zudem Salze und Mineralien, die bei einem Wassereinbruch in die Luftkammer gelangen, ausgeschieden, was ebenfalls zu einer Verstopfung der Luftleitungen führen kann.

Solche Abdichtungssysteme sind aus JP H06 8882 A und US 2014/048461 A1 bekannt.

Aufgabe der Erfindung ist es, ein Abdichtungssystem zum Abdichten von einer sich unter Wasser befindenden Welle zu schaffen, das die vorgenannten Nachteile beseitigt und insbesondere eine zuverlässige, wartungsarme und hochbelastbare Wellenabdichtung ermöglicht. Zudem ist es Aufgabe der Erfindung, ein Verfahren zum derartigen Abdichten einer sich unter Wasser befindenden Welle sowie ein Wasserfahrzeug mit einer derartig abgedichteten Propellerwelle zu schaffen.

Diese Aufgabe wird gelöst durch ein Abdichtungssystem mit den Merkmalen des Patentanspruchs 1, durch ein Verfahren mit den Merkmalen des Patentanspruchs 7 und durch ein Wasserfahrzeug mit den Merkmalen des Patentanspruchs 9.

Ein erfindungsgemäßes Abdichtungssystem zum Abdichten von einer sich unter Wasser befindenden Welle hat eine auf die Welle aufsetzbare und mit dieser drehfest verbindbare Laufbuchse, die von einem zur Laufbuchse feststehenden Gehäuse umschlossen ist. In dem Gehäuse ist zumindest eine zur Laufbuchse geöffnete Schmiermittelkammer und eine zur Laufbuchse geöffnete Luftkammer ausgebildet. Die Kammern sind über einen Dichtring gegeneinander abgedichtet bzw. axial voneinander getrennt. Zudem ist eine die Laufbuchse umgreifende propellernahe Gleitringdichtung vorgesehen. Zum Zu- und Abführen von Luft in bzw. aus der Luftkammer hat das Abdichtungssystem zumindest eine Zuleitung und eine Ableitung. Erfindungsgemäß ist die zumindest eine Schmiermittelkammer mit einem Schmieröl befüllt, das über zumindest eine Ölleitung mit einem Schmiermitteltank in Fluidverbindung steht, wobei ein Luftdruck in der Luftkammer größer als ein Öldruck in der Schmiermittelkammer ist.

Durch den höheren Kammerinnendruck in der Luftkammer als in der Schmiermittelkammer wird verhindert, dass das Schmiermittel aus der Schmiermittelkammer in die Luftkammer eintreten kann. Ohne genügend Luftdruck würde der Dichtring durch den Öldruck angehoben werden. Ein Öleinbruch wird somit verhindert. Bevorzugterweise ist der Öldruck in der Schmiermittelkammer um 0,02 bar bis 0,2 bar größer als ein Referenzdruck auf einem Referenzniveau. Der Öldruck kann beispielsweise durch Anordnung des Schmiermitteltanks in Vertikalrichtung betrachtet oberhalb des Referenzniveaus eingestellt werden. Der Luftdruck bzw. Ruheluftdruck in der Luftkammer ist bevorzugterweise um 0,1 bis 0,5 bar größer als der Öldruck. Das Referenzniveau befindet sich auf Höhe einer Wellendrehachse bzw. Wellenlängsachse, die somit bezogen auf das Referenzniveau eine Höhe gleich Null hat. Sollte widererwartend Schmieröl in die Luftkammer eintreten, so kann dieses aufgrund seiner hohen Fluidität die Luftleitungen und insbesondere die Ableitung dennoch nicht verstopfen, so dass selbst beim Schmieröleinbruch die Luftversorgung der Luftkammer und insbesondere eine Luft- und Leckageabfuhr aus der Luftkammer gewährleistet ist. Desweiteren weist das Schmieröl eine bessere Schmier- und Kühlwirkung bezüglich des bevorzugterweise aus einem Elastomer gebildeten Dichtrings auf als ein herkömmlicherweise verwendetes Schmierfett. Das erfindungsgemäße Abdichtungssystem eignet sich insbesondere zum Abdichten von Propellerwellen bei Wasserfahrzeugen mit oder ohne Gondelantrieb. Die Laufbuchse kann dann beispielsweise eine sogenannte Wellenschonbuchse sein, die mit einem Propeller verbunden ist und die einen direkten Kontakt der Propellerwelle mit Seewasser verhindert. Bei lediglich einer Ölleitung kann eine Reinigung der zumindest einen Schmiermittelkammer über die Luftkammer erfolgen, das heißt der Öldruck wird derart erhöht, dass das Schmieröl aus der Schmiermittelkammer in die Luftkammer eintritt und dann aus dieser über die Ableitung abgeführt wird. Die lediglich ein Ölleitung ist bevorzugterweise in Einbaulage der Welle oberhalb der Schmierkammer angeordnet. Wenn eine weitere Ölleitung vorgesehen ist, kann ein Ölkreislauf bzw. eine kontinuierliche Ölversorgung durch die Schmiermittelkammer realisiert werden, wobei die Ölzuführung und die Ölentnahme bevorzugterweise diametral gegenüberliegend erfolgt. Die zweite Ölleitung kann jedoch auch nur beim Drainieren der Schmiermittelkammer aufgesteuert werden, so dass trotz zwei Ölleitungen eine diskontinuierliche Ölversorgung erfolgt. Selbstverständlich können auch weitere Ölleitungen vorgesehen sein, beispielsweise zwei zulaufseitige Ölleitungen und eine auslaufseitige Ölleitung.

Bevorzugterweise hat das Abdichtungssystem ein Steuergerät, das auf ein zuleitungsseitiges Druckluftregelventil und/oder auf eine ableitungsseitige Ventileinrichtung wirkt. Das beispielsweise pneumoelektrische Steuergerät ermöglicht ein automatisches Drainieren der Luftkammer nach einem vorgegebenen Zeitintervall. Bevorzugterweise wird somit kein kontinuierlicher Luftstrom durch die Luftkammer geführt, sondern es erfolgt eine diskontinuierliche Luftführung, was sich in einem reduzierten Luftverbrauch gegenüber dem vorbeschriebenen Stand der Technik äußert. Das Drainieren bzw. Ausblasen selbst erfolgt über eine Luftdruckerhöhung und wird bevorzugterweise ebenfalls über das Steuergerät geregelt. Hierzu kann es zusätzlich auf ein Druckluftregelventil wirken, das eine Fluidverbindung zu einer Druckluftquelle bzw. zu einem bordseitigen Druckluftnetz entsprechend aufsteuert. Um ein Herausdrücken von sich eventuell in der Luftkammer angesammelter Flüssigkeit infolge eines unwahrscheinlichen Wassereinbruchs und/oder Öleinbruchs zu gewährleisten, kann ein Ausblasluftdruck beispielsweise um 0,2 bis 0,5 bar bezogen auf eine Drainagehöhe erhöht werden.

Alternativ oder zusätzlich zum Steuergerät kann zuleitungsseitig ein Flüssigkeitsmessgerät angeordnet sein, mittels dem ein Flüssigkeits- bzw. Feuchtigkeitsgehalts in der Zuleitung festgestellt werden kann. Das Flüssigkeitsmessgerät ist derart ausgeführt, dass es an einem bestimmten Flüssigkeits- bzw. Feuchtigkeitsgehalts entweder ein Alarmsignal erzeugt und somit auf die Notwendigkeit eines Drainagevorgangs hinweist und/oder es kann ein Aktivierungssignal an das Steuergerät weitergeben, so dass dann über das Steuergerät automatisch ein Drainagevorgang eingeleitet wird. Hierdurch wird gewährleistet, dass auch dann ein Drainagevorgang der Luftkammer durchgeführt wird, wenn das vorgegebene Zeitintervall des Steuergeräts noch nicht abgelaufen bzw. erreicht ist. Dies ist insbesondere bei unvorhergesehenen Ereignissen wie einem Wasser- und/oder Öleinbruch der Fall.

Ableitungsseitig der Luftkammer kann ein Auffangbehälter zum Auffangen von der aus der Luftkammer abgeführter Flüssigkeit und ein Füllstandsmesser angeordnet sein, wobei der Füllstandsmesser beim Erreichen eines maximalen Flüssigkeitsniveaus im Behälter ein Aktivierungssignal an das Steuergerät zum Einleiten eines Drainagevorgangs weiterleitet und/oder ein Alarmsignal auslöst. Der Auffangbehälter mit dem Füllstandsmesser kann alternativ oder zusätzlich zum zuleitungsseitigen Flüssigkeitsmessgerät angeordnet sein. Wenn der Auffangbehälter mit dem Flüssigkeitsmesser alternativ zum zuleitungsseitigen Flüssigkeitsmessgerät vorgesehen ist, wird gewährleistet, dass auch dann ein Drainagevorgang der Luftkammer durchgeführt wird, wenn das vorgegebene Zeitintervall des Steuergeräts noch nicht abgelaufen bzw. erreicht ist. Dies ist insbesondere bei unvorhergesehenen Ereignissen wie einem Wasser- und/oder Öleinbruch der Fall. Wenn der Auffangbehälter mit dem Flüssigkeitsmesser zusätzlich vorgesehen ist, wird die Flüssigkeit gezielt aus der luftseitigen Ableitung herausgeführt, wobei durch den Flüssigkeitsmesser ein Überlaufen des Auffangbehälters verhindert wird.

Um beim Drainieren der Luftkammer einen unkontrollierten Luftdruckabfall in der Luftkammer zu verhindern, kann ableitungsseitig eine Drossel bzw. Drosselstrecke vorgesehen sein. Wenn die vorbeschriebene Ventileinrichtung vorgesehen ist, befindet sich die Drossel stromabwärts der Ventileinrichtung bzw. zwischen der Ventileinrichtung und dem Ableitungsauslauf.

Bevorzugterweise ist die zumindest eine Schmiermittelkammer an seiner zur Luftkammer entgegengesetzten Seite gegen einen Innenraum abgedichtet, in dem bezogen auf das Referenzniveau ein Innendruck herrscht, der geringer als der Öldruck ist. Durch den höheren Öldruck gegenüber dem Innenraumdruck wird verhindert, dass durch eine zwischen der Schmiermittelkammer und dem Innenraum angeordneten Dichtung Luft aus dem Innenraum in die Schmiermittelkammer eindringen kann. Ohne genügenden Öldruck würde der Dichtring durch den Luftdruck angehoben werden. Wenn das Abdichtungssystem in einen Gondelantrieb eines Wasserfahrzeugs integriert ist, wird es bevorzugt, wenn in dem Innenraum bzw. Gondelinnenraum der außerhalb des Wasserfahrzeugs oberhalb einer Wasserlinie herrschende Umgebungsdruck bzw. Atmosphärendruck vorherrscht. Im Innenraum herrscht somit bevorzugterweise der Atmosphärendruck auf Wasserhöhe.

Bevorzugterweise steht die Luftkammer mit einer zur Laufbuchse geöffneten bzw. von dieser begrenzten Ringkammer der Gleitringdichtung in Fluidverbindung. Somit ist ebenfalls die Ringkammer mit dem Luftdruck beaufschlagt. Hierdurch wird verhindert bzw. zumindest erschwert, beispielsweise bei einem Defekt der Gleitringdichtung, dass in die Ringkammer Seewasser eindringen kann. Zudem wird die Ringkammer beim Ausblasen der Luftkammer ebenfalls drainiert.

Bei einem erfindungsgemäßen Verfahren zum Abdichten einer sich unter Wasser befindenden Welle, wobei zumindest eine zur Welle geöffnete Schmiermittelkammer mit einem Schmieröl und eine zur Welle geöffnete axial benachbarte Luftkammer mit Luft beaufschlagt wird, wobei die Kammern radial innen durch die Welle oder durch eine auf der Welle angeordnete Laufbuchse geschlossen sind und zwischen den Kammern ein Dichtring angeordnet ist, der die beiden Kammern voneinander trennt, wird erfindungsgemäß der Luftdruck in der Luftkammer größer als ein Öldruck in der Schmiermittelkammer gesetzt. Das erfindungsgemäße Verfahren ermöglicht eine zuverlässige und wartungsarme Abdichtung einer Propellerwelle eines Wasserfahrzeugs.

Ein Luftverbrauch lässt sich gering halten, wenn die Luftkammer diskontinuierlich drainiert wird. Durch die diskontinuierliche Drainage bildet sich nur während eines Drainagevorgangs ein Luftstrom aus, sondern die Luftkammer wird nur von Zeit zu Zeit in Ableitungsrichtung geöffnet.

Ein erfindungsgemäßes Wasserfahrzeug ist mit einem erfindungsgemäßen Abdichtungssystem zum Abdichten seiner zumindest einen Propellerwelle versehen. Hierdurch wird ein Wasserfahrzeug geschaffen, das eine zuverlässige, wartungsarme und energiearme propellerwellenseitige Abdichtung aufweist.

Sonstige vorteilhafte Ausführungsbeispiele der Erfindung sind Gegenstand weiterer Unteransprüche.

Im Folgenden werden zwei bevorzugte Ausführungsbeispiele der Erfindung anhand schematischer Darstellungen näher erläutert. Es zeigen:
- Figur 1: einen schematischen Aufbau eines ersten Ausführungsbeispiels eines erfindungsgemäßen Abdichtungssystems, und
- Figur 2: ein zweites Ausführungsbeispiel des erfindungsgemäßen Abdichtungssystems.

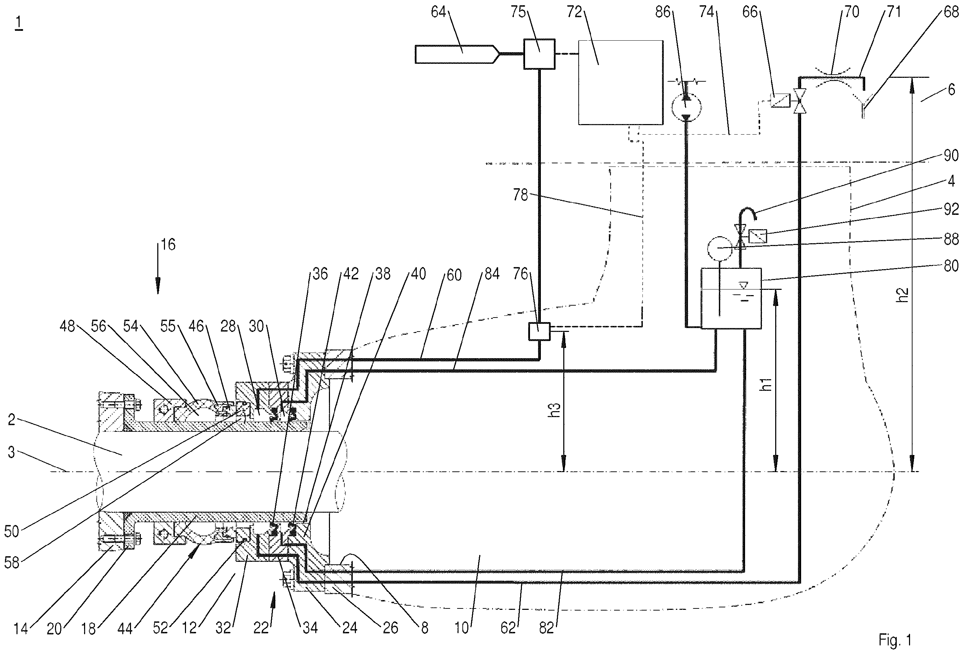

In Figur 1 ist ein erstes Ausführungsbeispiel eines erfindungsgemäßen Abdichtungssystems 1 einer sich unter Wasser befindenden Welle 2 gezeigt. Die Welle 2 ist um seine Längsachse 3 drehbar und bevorzugterweise eine Propellerwelle eines Wasserfahrzeugs. Im Wesentlichen ist sie in Einbaulage und in Schwimmlage des Wasserfahrzeugs wie dargestellt horizontal oder mit geringer Neigung zur Horizontalen orientiert. Die Längsachse 3 bzw. Wellendrehachse gibt ein Referenzniveau für eine im Folgenden noch erläuterte Betankungshöhe h1, eine Drainagehöhe h2 und eine Messhöhe h3 vor. Die Wellendrehachse 3 liegt quasi auf dem Referenzniveau mit einer Höhe h0.

Das Wasserfahrzeug hat hier zumindest eine antriebsseitige Gondel 4, die an einem Schiffsrumpf 6 in Vertikalrichtung verschwenkbar aufgehängt ist. Die Welle 2 ist durch eine Öffnung 8 aus einem Innenraum 10 der Gondel 4 in einen Seewasserraum 12 geführt und endseitig mit einem Propeller 14 versehen.

Das Abdichtungssystem 1 hat im Wesentlichen eine im Folgenden erläuterte Wellendichtung 16, eine im Folgenden noch erläuterte Schmierölversorgung und eine ebenfalls eine im Folgenden erläuterte Luftversorgung.

Die Wellendichtung 16 weist zumindest eine Laufbuchse 18 auf, die auf der Welle 2 drehfest angeordnet ist und einen Ringflansch 20 hat, über den sie an dem Propeller 14 angeschraubt ist Die Laufbuchse 18 ist von einem Gehäuse 22 umschlossen, das einen Ringflansch 24 zur Befestigung an einem die Öffnung 8 umgebenden Gondelabschnitt 26 hat. Die Laufbuches bzw. Wellenschonbuchse 18 umschließt die Welle 2 somit über ihre gesamte freie Länge außerhalb der Gondel und schützt diese somit vor Seewasser.

Das Gehäuse 22 bildet eine zur Laufbuchse 18 geöffnete Luftkammer 28 und eine axial benachbarte und ebenfalls zur Laufbuchse 18 geöffnete Schmiermittelkammer 30. Dabei befindet sich die Schmiermittelkammer 30 an einer der Gondel 4 zugewandten Seite der Luftkammer 28. Die Kammern 28, 30 sind in jeweils einem Gehäusesegment 32, 34 gebildet und über einen Dichtring 36 gegeneinander abgedichtet. Der Dichtring 36 ist ein Radialwellendichtring und hier insbesondere eine elastomere Lippendichtung, die in Richtung der Luftkammer 28 orientiert ist. Zum Abdichten eines Ringspaltes 38, der zwischen einem den Ringflansch 24 bildenden Gehäusesegment 40 und der Laufbuchse 18 gebildet ist, ist an einer von der Luftkammer 28 entfernten Seite der Schmiermittelkammer 30 zwischen dem Gehäusesegment 34 und dem Gehäusesegment 40 ein Dichtring 42 eingesetzt. Der Dichtring 42 ist ebenfalls ein Radialwellendichtring und hier insbesondere eine elastomere Lippendichtung, die in Richtung der Schmiermittelkammer 30 orientiert ist. Durch die Orientierung des Dichtrings bzw. der Lippendichtung 36 in die Luftkammer 28 und durch die Orientierung des Dichtrings bzw. der Lippendichtung 42 in die Schmiermittelkammer 30 ragen deren Dichtlippen jeweils in die gewöhnlich mit einem höheren Druck beaufschlagbare Kammer 28, 30 hinein.

Zwischen der Luftkammer 28 und dem den Propeller 14 aufnehmenden Ringflansch 20 der Laufbuchse 18 ist eine Gleitringdichtung 44 vorgesehen. Die Gleitringdichtung 44 hat einen auf der Laufbuchse 18 angeordneten Gleitring 46, der zwischen einem auf der Laufbuchse 18 positionierten propellerseitigen Klemmring 48 und einem Lagergehäuseseitigen Gegenring 50 angeordnet ist. Der rotierende Gleitring 46 steht im vorgespannten Kontakt mit dem nichtrotierenden Gegenring 50, der in eine nicht bezifferte axiale Vertiefung des die Luftkammer 28 bildenden Gehäusesegments 32 eingesetzt ist. Um einen Wassereintritt außenumfangsseitig des Gegenrings 50 in die Luftkammer 28 zu verhindern, ist zwischen dem Gegenring 50 und einem gegenüberliegenden Innenumfangsabschnitt der axialen Vertiefung ein Außendichtring 52 eingesetzt. An einer dem Klemmring 48 zugewandten Seite des Gleitrings 46 ist ein Dichtbalg 54, beispielsweise ein Elastomer-Dichtbalg, angeordnet. Der Dichtbalg 54 ist durch den Klemmring 48 an seinem einen Ende eingeklemmt und an hat an seinem anderen Ende eine einvulkanisierte Gleitringaufnahme 55, die über einen nicht bezifferten Mitnehmer mit dem Gleitring 46 in Wirkverbindung steht. Die Gleitringdichtung 44 begrenzt eine die Laufbuchse 18 umgebende Ringkammer 56, die über einen Ringspalt 58 mit der Luftkammer 28 in Fluidverbindung steht.

Die Luftversorgung dient zum Zuführen und Abführen von Luft in bzw. aus der Luftkammer 28. Hierzu ist zumindest eine in die Luftkammer 28 mündende Zuleitung 60 und eine sich aus der Luftkammer 28 erstreckende Ableitung 62, eine Druckluftquelle 64 sowie eine Ventileinrichtung wie ein Magnetventil 66 vorgesehen. In dem hier gezeigten Ausführungsbeispiel ist die Zuleitung 60 oberhalb der Ableitung 62 angeordnet, wodurch Flüssigkeiten aus der Luftkammer 28 zuverlässig herausgeführt werden können. Die Zuleitung 60 ist mit der Druckluftquelle 64 verbunden, die bevorzugterweise im Schiffsrumpf 6 und somit in Einbaulage bezogen auf die Wellendrehachse 3 oberhalb der Gondel 4 angeordnet ist. Die Druckluftquelle 64 symbolisiert hier ein schiffseitiges Druckluftnetz, in das die Luftversorgung integriert ist. Selbstverständlich kann anstelle einer Integration in das borseitige Druckluftnetz auch eine separate Druckluftquelle 64 nur für das Abdichtungssystem 1 bzw. deren Luftversorgung vorgesehen sein. Die Ventileinrichtung 66 zum Auf- und Zusteuern der Ableitung 62 ist ableitungsseitig und hier in dem Schiffsrumpf 6 angeordnet. Über die Ventileinrichtung 66 kann die abgeführte Luft einem Sammelbehälter 68, beispielweise einer Bilge 68, zugeführt werden. Um einen unkontrollierten Luftdruckabfall in der Luftkammer 28 beim Ausblasen zu vermeiden, ist stromabwärts der Ventileinrichtung 66 bzw. zwischen der Ventileinrichtung 66 und der Bilge 68 eine Drossel bzw. Drosselstrecke 70 vorgesehen. Ein Ableitungsabschnitt 71 stromabwärts der Ventileinrichtung 66 und hier der die Drossel 70 aufnehmender Ableitungsabschnitt befindet sich bezogen auf das Referenzniveau auf der Drainagehöhe h3, die den höchsten Punkt der Ableitung 62 darstellt.

Zuleitungsseitig der Luftkammer 28 ist zudem ein Steuergerät 72 angeordnet, das über eine Steuerleitung 74 auf die Ventileinrichtung 66 wirkt. Das Steuergerät 72 leitet nach einer bestimmten Zeitintervall ein automatisches Drainieren bzw. Ausblasen der Luftkammer 28. Das Steuergerät 72 gibt hierzu über die Steuerleitung 74 ein entsprechendes Öffnungssignal an die Ventileinrichtung 66. Gleichzeitig steuert das Steuergerät 72 einen Durchflussquerschnitt eines stromabwärts der Druckluftquelle 64 angeordneten zuleitungsseitigen Druckregelventils 75 auf, so dass ein kontinuierlicher Luftstrom durch die Luftkammer 28 mit zudem einen gegenüber einem Ruheluftdruck erhöhten Ausblasluftdruck geführt wird. Das Druckregelventil 75 ist bevorzugterweise ein Proportional-Druckregelventil. Stromabwärts des Steuergerätes 72 und somit zwischen dem Steuergerät 72 und der Luftkammer 28 ist ein Flüssigkeitsmessgerät 76 angeordnet, mittels dem ein Flüssigkeits- oder Feuchtigkeitsgehalt in der Zuleitung 60, beispielsweise infolge eines Wasser- und/oder Schmieröleinbruchs in der Luftkammer 28, erfasst werden kann. Das Flüssigkeitsmessgerät 76 gibt über eine Meldeleitung 78 ein Aktivierungssignal an das Steuergerät 72. Alternativ oder zusätzlich kann es ein Alarmsignal auslösen. Bevorzugterweise befindet es sich in der Drainagehöhe h3 bezogen auf das Referenzniveau. Beim Ausblasen der Luftkammer 28 wird der Ausblasluftdruck bevorzugterweise um 0,2 bis 0,5 bar bezogen auf eine entsprechende Wassersäule von der Drainagehöhe h3 erhöht.

Die Schmiermittelversorgung dient zum Zuführen und Abführen des Schmieröls in die Schmiermittelkammer 30 zum Schmieren der Dichtringe 36, 42. Hierzu ist zumindest ein Schmiermitteltank 80, ein in die Schmiermittelkammer 30 mündender Zulauf 82 und ein sich von der Schmiermittelkammer 30 erstreckender Ablauf 84, sowie eine Schmiermittelpumpe 86 vorgesehen. Die Vorsehung von zwei Ölleitungen 82, 84 ist hier lediglich beispielhaft. Selbstverständlich ist/sind auch nur eine Ölleitung 82 oder mehr als zwei Ölleitungen 82, 84 vorstellbar. Der Zulauf 82 und der Ablauf 84 stehen mit dem Schmiermitteltank 80 in Fluidverbindung, so dass hier eine Kreislaufförderung des Schmiermittels erfolgen kann bzw. ein kontinuierlicher Schmiermittelstrom durch die Schmiermittelkammer 30 geführt werden kann. In dem hier gezeigten Ausführungsbeispiel mit zwei Ölleitungen 80, 82 ist der Zulauf 82 unterhalb und der Ablauf 84 oberhalb des Referenzniveaus angeordnet, so dass insbesondere Gase in der Schmiermittelkammer 30 verlässlich herausgeführt werden. Dabei kann das aus der Schmiermittelkammer 30 abgeführte Schmieröl einem nicht näher erläuterten Reinigungsprozess wie einer eventuellen Entwässerung, Entgasung und Entsalzung unterzogen und als Frischöl der Schmiermittelkammer 30 wieder zugeführt werden. Bevorzugterweise befindet sich der Schmiermitteltank 80 im Innenraum 10 der Gondel auf der Betankungshöhe h1 bezogen auf das Referenzniveau. In Relation zur Messhöhe h1 und zur Drainagehöhe h3 ist der Schmiermitteltank 80 in Vertikalrichtung zwischen dem luftversorgungs- und zuleitungsseitigen Flüssigkeitsmessgerät 76 und dem luftversorgungs- und ableitungsseitigen Ableitungsabschnitt 71 angeordnet. Der Schmiermitteltank 30 ist insbesondere derart angeordnet, dass in der Schmiermittelkammer 30 ein Öldruck herrscht, der um etwa 0,02 bar bis 0,2 bar gegenüber einem Referenzdruck bzw. Innendruck auf Höhe des Referenzniveaus erhöht ist.

Die Schmiermittelpumpe 86 dient zur Schmiermitteltankentleerung bzw. Schmiermitteltankbefüllung. In dem hier gezeigten Ausführungsbeispiel ist die Schmiermittelpumpe 86 schiffsrumpfseitig positioniert und somit nicht in der Gondel 4 angeordnet ist.

Zum Messen eines Schmiermittelniveaus im Schmiermitteltank 80 ist in diesem ein Füllstandsmesser 88 angeordnet. Dieser ist in einer einfachen Form als ein Schwimmschalter ausgeführt und steht mit der Schmiermittelpumpe 86 zum automatischen Befüllen beim Unterschreiten eines minimalen Schmiermittelniveaus in Wirkverbindung. Über eine Entlüftungsleitung 90, die über ein Absperrventil 92 zusteuerbar ist, wird der Schmiermitteltank 80 entlüftet. Das Absperrventil 92 ist bevorzugterweise elektrisch betätigbar und wird bei Beschädigung des Dichtrings 36 geschlossen.

Im Folgenden wird ein bevorzugtes erfindungsgemäßes Verfahren zum Abdichten einer sich unter Wasser befindenden Welle 2 näher erläutert. Im Betrieb wird mittels der Schmierölversorgung ein kontinuierlicher Ölstrom durch die Schmiermittelkammer 30 geführt, so dass die Dichtringe 36, 42 ölgeschmiert sind. Bevorzugterweise wird ein Öldruck in der Schmiermittelkammer 30 eingestellt, der sich aus der Betankungshöhe h1 ergibt. In dem hier beschriebenen Ausführungsbeispiel ist der Öldruck 0,02 bis 0,2 bar höher als ein Innenraumdruck im Innenraum 10 der Gondel 4 auf Höhe von dem Referenzniveau. Bevorzugterweise herrscht im Innenraum 10 Atmosphärendruck.

Die Luftkammer 28 wird mittels des Steuergeräts 72 und des Druckregelventils 75 mit einem Ruheluftdruck beaufschlagt, der um 0,1 bis 0,5 bar höher ist als der Öldruck in der Schmiermittelkammer 30 ist. Im Normalbetrieb ist die Ableitung 62 der Luftkammer 28 geschlossen. Im Drainagebetrieb, das heißt nach einem von dem Steuergerät 72 erfasstem Zeitintervall, wird ein Drainagevorgang der Luftkammer 28 eingeleitet. Hierzu wird das Druckregelventil 75 über das Steuergerät 72 aufgesteuert und der Luftdruck in der Luftkammer 28 entsprechend einer sogenannten Wassersäule von der Drainagehöhe h2 um beispielsweise 0,2 bar bis 0,5 bar erhöht, um eventuell vorhandene Flüssigkeit aus der Luftkammer 28 herauszudrücken. Gleichzeitig wird die Ventileinrichtung 66 über das Steuergerät 72 mit einem Öffnungssignal beaufschlagt und somit die Ableitung 62 in Richtung der Bilge 68 geöffnet.

Nach erfolgtem Ausblasen bzw. Drainieren wird die Ventileinrichtung 66 über das Steuergerät 72 mit einem Schließsignal beaufschlagt und somit die Ableitung 62 zugesteuert. Gleichzeitig wird der Luftdruck über das Druckregelventil 75 auf den reduzierten Druckwert eingestellt. Abschließend wird der Ruheluftdruck über das Druckregelventil 75 automatisch konstant gehalten.

Wenn das Flüssigkeitsmessgerät 76 auf der Messhöhe h3 einen bestimmten Flüssigkeits- bzw. Feuchtigkeitsgehalt in der Zuleitung 60 erfasst, gibt dieses über die Meldeleitung 78 bevorzugterweise ein Aktivierungssignal und an das Steuergerät 72 zum Einleiten eines Drainagevorgangs, unabhängig vom Erreichen eines Zeitintervalls. Das Flüssigkeitsmessgerät 76 stellt somit eine Zusatzvorrichtung zum Steuergerät 72 dar, so dass selbst bei einem plötzlichen Wasser- und/oder Öleinbruch in die Luftkammer 28 eine zeitnahe bzw. sofortige Drainage der Luftkammer 28 gewährleistet ist. Zudem ist mittels des Flüssigkeitsgeräts 76 selbst dann eine Drainage der Luftkammer 28 gewährleistet, wenn eine Zeiterfassung des Steuergeräts 72 widererwartend ausfallen sollte. Die Drainage kann aber auch manuell durch Bedienpersonal erfolgen. Hierzu kann das Flüssigkeitsmessgerät 76 ein Alarmsignal auslösen. Das Alarmsignal kann jedoch auch bei einer automatischen Drainage erzeugt werden, um das Bedienpersonal auf den Flüssigkeitsbruch an sich hinzuweisen, so dass dieses entsprechende Maßnahmen, beispielsweise Kontroll- und/oder Reparaturmaßnahmen, vornehmen kann.

Dadurch, dass der Dichtring 36 zwischen der Luftkammer 28 und der Schmiermittelkammer 30 in Richtung der Luftkammer 28 orientiert ist, wird dieser jederzeit über den Luftdruck gegen die Laufbuchse 18 gedrückt, so dass ein Abheben dieses Dichtrings 36 durch das sich in der Schmiermittelkammer 30 befindende Schmieröl verhindert wird. Analog wird der Dichtring 42 zwischen der Schmiermittelkammer 30 und dem Innenraum 10 der Gondel 4 durch das Schmieröl gegen die Laufbuchse 18 gedrückt und somit verhindert, dass der Innenraumdruck den Dichtring 42 von der Laufbuchse 18 abhebt.

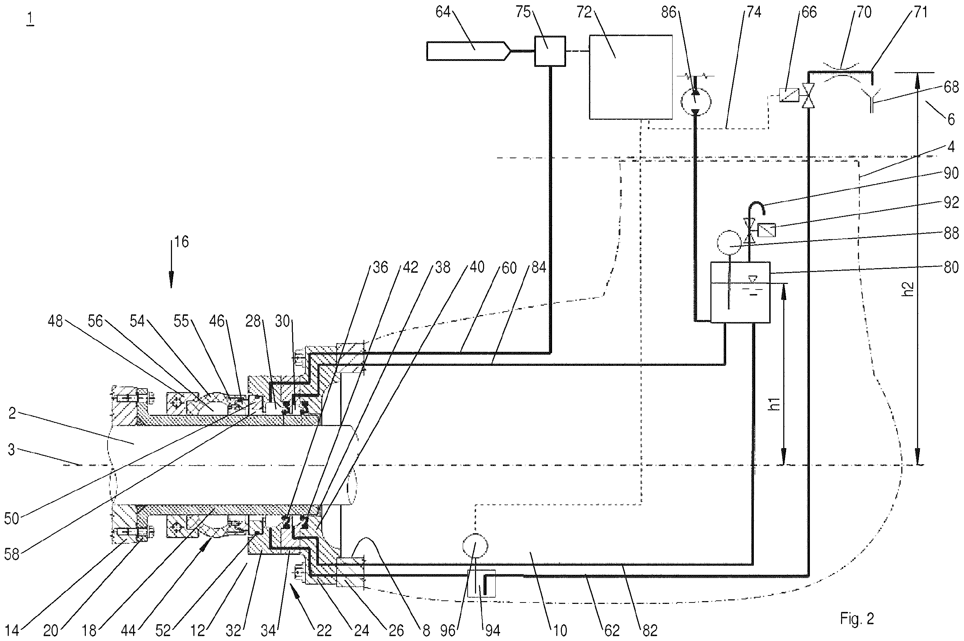

Bei dem in Figur 2 gezeigten Ausführungsbeispiel des erfindungsgemäßen Abdichtungssystems 1 ist im Unterschied zum ersten Ausführungsbeispiel nach Figur 1 anstelle eines zur Luftkammer 28 zulaufseitigen Flüssigkeitsmessgerät 76 als Zusatzvorrichtung zum Steuergerät 72 ableitungsseitig der Luftkammer 28 eine Zusatzvorrichtung angeordnet. Diese hat einen Auffangbehälter 94 zum Auffangen von aus der Luftkammer 28 austretender Flüssigkeit und einen Füllstandsmesser 96. Die Flüssigkeit aus der Luftkammer 28 läuft in den Auffangbehälter 94 und sammelt sich dort. Der Füllstandsmesser 96 steht über eine Meldeleitung 78 mit einem Steuergerät 72 in Verbindung. Bei Erreichen eines bestimmten Flüssigkeitsniveaus im Auffangbehälter 94 gibt der Füllstandsmesser 96 über die Meldeleitung 78 ein Aktivierungssignal an das Steuergerät 72, woraufhin dieses einen in Figur 1 beschriebenen Drainagevorgang einleitet.

Zudem dient insbesondere bei einem vom Steuerglied 72 gesteuerten Drainagevorgang der Auffangbehälter 94 als Sammelstelle zum luftkammernahen Abführen der Flüssigkeit aus der Ableitung 62. Eine dabei im Auffangbehälter 94 aufgefangene Flüssigkeitsmenge und/oder Flüssigkeitszusammensetzung gibt hierbei Aufschluss über die Dichtwirkung der Dichtringe 36, 42. Dabei kann das Steuergerät 72 basierend auf der Flüssigkeitsmenge und/oder Flüssigkeitszusammensetzung das Zeitintervall zum regelmäßigen automatischen Drainieren der Luftkammer 28 selbst einstellen bzw. nachjustieren und des Weiteren ein Zeitpunkt zum Erneuern der Dichtringe 36, 42 vorgegeben werden.

Offenbart ist ein Abdichtungssystem zum Abdichten von einer sich unter Wasser befindenden Welle, insbesondere eine Propellerwelle eines Schiffs, mit zwei Dichtungssystemen, wobei das propellerferne Dichtungssystem bevorzugterweise zumindest eine Lippendichtung zum Trennen einer Luftkammer von einer Schmiermittelkammer und das propellernahe Dichtungssystem eine Gleitringdichtung hat, wobei ein Luftdruck in der Luftkammer größer als ein Schmieröldruck in der Schmiermittelkammer ist, ein Verfahren zum Abdichten einer Welle, insbesondere einer Propellerwelle und ein Wasserfahrzeug.

### Bezugszeichenliste

- 1: Abdichtungssystem
- 2: Welle / Propellerwelle
- 3: Längsachse / Wellendrehachse / Referenzniveau
- 4: Gondel
- 6: Schiffsrumpf
- 8: Öffnung
- 10: Innenraum
- 12: Seewasserraum
- 14: Propeller
- 16: Wellendichtung
- 18: Laufbuchse / Wellenschonbuchse
- 20: Ringflansch
- 22: Gehäuse
- 24: Ringflansch
- 26: Gondelabschnitt
- 28: Luftkammer
- 30: Schmiermittelkammer
- 32: Gehäusesegment
- 34: Gehäusesegment
- 36: Dichtring / Lippendichtung
- 38: Ringspalt
- 40: Gehäusesegment
- 42: Dichtring / Lippendichtung
- 44: Gleitringdichtung
- 46: Gleitring
- 48: Klemmring
- 50: Gegenring
- 52: Außendichtring
- 54: Dichtbalg
- 55: Gleitringaufnahme
- 56: Ringkammer
- 58: Ringspalt
- 60: Zuleitung
- 62: Ableitung
- 64: Druckluftquelle
- 66: Ventileinrichtung
- 68: Sammelbehälter / Bilge
- 70: Drossel / Drosselstrecke
- 71: Ableitungsabschnitt
- 72: Steuergerät
- 74: Steuerleitung
- 75: Druckregelventil
- 76: Flüssigkeitsmessgerät
- 78: Meldeleitung
- 80: Schmiermitteltank
- 82: Zulauf
- 84: Ablauf
- 86: Schmiermittelpumpe
- 88: Füllstandsmesser
- 90: Entlüftungsleitung
- 92: Absperrventil
- 94: Auffangbehälter
- 96: Füllstandsmesser

## Patentansprüche

1. Abdichtungssystem (1) zum Abdichten von einer sich unter Wasser befindenden Welle (2), mit einer auf der Welle (2) aufsetzbaren und mit dieser drehfest verbindbaren Laufbuchse (18), die von einem zur Laufbuchse (18) feststehenden Gehäuse (22) umschlossen ist, wobei in dem Gehäuse (22) zumindest eine zur Laufbuchse (18) geöffnete Schmiermittelkammer (30) und eine zur Laufbuchse (18) geöffnete Luftkammer (28) ausgebildet sind, wobei die Kammern (28, 30) über einen Dichtring (36) gegeneinander abgedichtet sind, mit einer Zuleitung (60) und einer Ableitung (62) zum Zu- und Abführen von Luft in bzw. aus der Luftkammer (28), wobei die zumindest eine Schmiermittelkammer (30) mit einem Schmieröl befüllt ist, das über mindestens eine Ölleitung (82, 84) mit einem Schmiermitteltank (80) in Fluidverbindung steht, wobei ein Luftdruck in der Luftkammer (28) größer als ein Öldruck in der Schmiermittelkammer (30) ist,
**dadurch gekennzeichnet, dass**
das Abdichtungssytem eine die Laufbuchse (18) umgreifende Gleitringdichtung (44) aufweist
und dass die Schmiermittelkammer (30) an ihrer zur Luftkammer (28) entgegengesetzten Seite gegen einen Innenraum (10) abgedichtet ist, in dem ein Innendruck herrscht, der geringer als der Öldruck ist.

2. Abdichtungssystem nach Patentanspruch 1, wobei ein Steuergerät (72) vorgesehen ist, das auf ein druckluftquellenseitiges Druckluftregelventil (75) und/oder auf eine ableitungsseitige Ventileinrichtung (66) wirkt.

3. Abdichtungssystem nach Patentanspruch 1 oder 2, wobei zuleitungsseitig ein Flüssigkeitsmessgerät (76) angeordnet ist, das beim Erreichen eines bestimmten Flüssigkeits- bzw. Feuchtigkeitsgehalts ein Aktivierungssignal an das Steuergerät (72) zum Einleiten eines Drainagevorgangs weiterleitet und/oder ein Alarmsignal auslöst.

4. Abdichtungssystem nach Patentanspruch 1, 2 oder 3, wobei ableitungsseitig ein Auffangbehälter (94) zum Auffangen von aus der Luftkammer (28) abgeführten Flüssigkeit und ein Füllstandsmesser (96) angeordnet ist, der beim Erreichen eines maximalen Flüssigkeitsniveaus im Auffangbehälter (94) ein Aktivierungssignal an das Steuergerät (72) zum Einleiten eines Drainagevorgangs weiterleitet und/oder ein Alarmsignal auslöst.

5. Abdichtungssystem nach einem der vorhergehenden Patentansprüche, wobei ableitungsseitig eine Drossel (70) angeordnet ist.

6. Abdichtungssystem nach einem der vorhergehenden Patentansprüche, wobei die Luftkammer (28) mit einer zur Laufbuchse (18) geöffnenten Ringkammer (56) der Gleitringdichtung (44) in Fluidverbindung steht.

7. Verfahren zum Abdichten einer sich unter Wasser befindenden Welle (2), wobei eine zur Welle (2) geöffnete Schmiermittelkammer (30) mit einem Schmieröl und eine zur Welle (2) geöffnete axial benachbarte Luftkammer (28) mit Luft beaufschlagt wird, wobei die Kammern (28, 30) radial innen durch die Welle (2) oder durch eine auf der Welle (2) angeordnete Laufbuchse (18) geschlossen sind und zwischen den Kammern (28, 30) ein Dichtring (36) angeordnet ist, die die beiden Kammern (28, 30) voneinander trennt, wobei der Luftdruck in der Luftkammer (28) größer als ein Öldruck in der Schmiermittelkammer (30) gesetzt wird,
**dadurch gekennzeichnet, dass** die Schmiermittelkammer (30) an ihrer zur Luftkammer (28) entgegengesetzten Seite gegen einen Innenraum (10) abgedichtet wird, in dem ein Innendruck herrscht, der geringer als der Öldruck ist.

8. Verfahren nach Patentanspruch 7, wobei die Luftkammer (28) diskontinuierlich drainiert wird.

9. Wasserfahrzeug mit einem Abdichtungssystem (1) zum Abdichten seiner zumindest einen Propellerwelle (2) nach einem der Patentansprüche 1 bis 6.

## Claims

1. Sealing system (1) for sealing off a shaft (2) that is located under water, having a liner (18) which can be placed on the shaft (2) and rotationally fixedly connected to the latter and which is enclosed by a housing (22) that is stationary relative to the liner (18), at least one lubricant chamber (30) that is open to the liner (18) and an air chamber (28) that is open to the liner (18) being formed in the housing (22), the chambers (28, 30) being sealed off relative to each other via a sealing ring (36), having a feed line (60) and a discharge line (62) for feeding and discharging air into and out of the air chamber (28), the at least one lubricant chamber (30) being filled with a lubricating oil which has a fluid connection to a lubricant tank (80) via at least one oil line (82, 84), an air pressure in the air chamber (28) being higher than an oil pressure in the lubricant chamber (30),
**characterized in that**
the sealing system has a sliding ring seal (44) engaging around the liner (18),
and **in that**, on its side opposite the air chamber (28), the lubricant chamber (30) is sealed off with respect to an internal space (10) in which there prevails an internal pressure which is lower than the oil pressure.

2. Sealing system according to Claim 1, wherein a control device (72) is provided, which acts on a compressed air control valve (75) on the compressed air source side and/or on a valve device (66) on a discharge line side.

3. Sealing system according to Claim 1 or 2, wherein on the feed line side there is arranged a liquid measuring device (76) which, when a specific liquid or moisture content is reached, forwards an activation signal to the control device (72) to initiate a drainage procedure and/or triggers an alarm signal.

4. Sealing system according to Claim 1, 2 or 3, wherein on the discharge line side there is arranged a collecting container (94) for collecting liquid discharged from the air container (28) and a filling level meter (96) which, when a maximum liquid level is reached in the collecting container (94), forwards an activation signal to the control device (72) to initiate a drainage procedure and/or triggers an alarm signal.

5. Sealing system according to one of the preceding claims, wherein a throttle (70) is arranged on the discharge line side.

6. Sealing system according to one of the preceding claims, wherein the air chamber (28) has a fluid connection to an annular chamber (56) of the sliding ring seal (44) that is open to the liner (18) .

7. Method for sealing off a shaft (2) that is located under water, a lubricant chamber (30) that is open to the shaft (2) having a lubricating oil applied and air being applied to an axially adjacent air chamber (28) that is open to the shaft (2), the chambers (28, 30) being closed radially on the inside by the shaft (2) or by a liner (18) arranged on the shaft (2), and, between the chambers (28, 30) there being arranged a sealing ring (36), which separates the two chambers (28, 30) from each other, the air pressure in the air chamber (28) being set to be higher than an oil pressure in the lubricant chamber (30), **characterized in that** on its side opposite the air chamber (28), the lubricant chamber (30) is sealed off with respect to an internal space (10) in which there prevails an internal pressure which is lower than the oil pressure.

8. Method according to Claim 7, wherein the air chamber (28) is drained discontinuously.

9. Watercraft having a sealing system (1) for sealing off its at least one propeller shaft (2) according to one of Claims 1 to 6.

## Revendications

1. Système d'étanchéité (1) pour rendre étanche un arbre (2) se trouvant sous l'eau, avec une douille de glissement (18) pouvant être montée sur l'arbre (2) et pouvant être assemblée à celui-ci de façon calée en rotation, qui est entourée par un boîtier (22) fixe par rapport à la douille de glissement (18), dans lequel au moins une chambre de lubrifiant (30) ouverte vers la douille de glissement (18) et au moins une chambre à air (28) ouverte vers la douille de glissement (18) sont formées dans le boîtier (22), dans lequel les chambres (28, 30) sont rendues étanches l'une par rapport à l'autre au moyen d'un anneau d'étanchéité (36), avec une conduite d'amenée (60) et une conduite d'évacuation (62) pour amener et évacuer de l'air dans ou hors de la chambre à air (28), dans lequel ladite au moins une chambre de lubrifiant (30) est remplie d'une huile de lubrification, qui est en communication fluidique par au moins une conduite d'huile (82, 84) avec un réservoir de lubrifiant (80), dans lequel une pression d'air dans la chambre à air (28) est plus élevée qu'une pression d'huile dans la chambre de lubrifiant (30), **caractérisé en ce que** le système d'étanchéité présente un joint annulaire glissant (44) entourant la douille de glissement (18) et **en ce que** la chambre de lubrifiant (30) est rendue étanche, sur son côté opposé à la chambre à air (28), par rapport à un espace intérieur (10), dans lequel il règne une pression intérieure qui est inférieure à la pression d'huile.

2. Système d'étanchéité selon la revendication 1, dans lequel il est prévu un appareil de commande (72), qui agit sur une soupape de régulation d'air comprimé (75) du côté de la source d'air comprimé et/ou sur un dispositif de soupape (66) du côté de la conduite d'évacuation.

3. Système d'étanchéité selon une revendication 1 ou 2, dans lequel un appareil de mesure de liquide (76) est disposé du côté de la conduite d'amenée, qui retransmet un signal d'activation à l'appareil de commande (72) pour lancer une opération de drainage et/ou qui émet un signal d'alarme lorsqu'une teneur en liquide ou en humidité est atteinte.

4. Système d'étanchéité selon une revendication 1, 2 ou 3, dans lequel une cuve de collecte (94) est disposée du côté de la conduite d'évacuation pour recueillir du liquide évacué de la chambre à air (28) ainsi qu'un détecteur de niveau (96), qui retransmet un signal d'activation à l'appareil de commande (72) pour lancer une opération de drainage et/ou qui émet un signal d'alarme lorsqu'un niveau maximal de liquide est atteint dans la cuve de collecte (94).

5. Système d'étanchéité selon l'une quelconque des revendications précédentes, dans lequel un étranglement (70) est disposé du côté de la conduite d'évacuation.

6. Système d'étanchéité selon l'une quelconque des revendications précédentes, dans lequel la chambre à air (28) est en communication fluidique avec une chambre annulaire (56) du joint annulaire glissant (44) ouverte vers la douille de glissement (18).

7. Procédé pour rendre étanche un arbre (2) se trouvant sous l'eau, dans lequel on alimente en huile de lubrification une chambre de lubrifiant (30) ouverte vers l'arbre (2) et en air une chambre à air (28) axialement voisine ouverte vers l'arbre (2), dans lequel les chambres (28, 30) sont fermées vers l'intérieur par l'arbre (2) ou par une douille de glissement (18) disposée sur l'arbre (2) et un anneau d'étanchéité (36) qui sépare les deux chambres (28, 30)l'une de l'autre est disposé entre les chambres (28, 30), dans lequel on crée une pression d'air dans la chambre à air (28) plus élevée qu'une pression d'huile dans la chambre de lubrifiant (30), **caractérisé en ce que** la chambre de lubrifiant (30) est rendue étanche, sur son côté opposé à la chambre à air (28), par rapport à un espace intérieur (10), dans lequel il règne une pression intérieure qui est supérieure à la pression d'huile.

8. Procédé selon la revendication 7, dans lequel la chambre à air (28) est drainée de façon discontinue.

9. Navire muni d'un système d'étanchéité (1) pour rendre étanche son au moins un arbre porte-hélice (2) selon l'une quelconque des revendications 1 à 6.
